(19) Europäisches Patentamt / European Patent Office / Office européen des brevets

(11) **EP 4 318 784 A1**

(12) **EUROPEAN PATENT APPLICATION**

(43) Date of publication:
**07.02.2024 Bulletin 2024/06**

(21) Application number: **22188914.0**

(22) Date of filing: **05.08.2022**

(51) International Patent Classification (IPC):
**H01M 50/533** (2021.01)        **H01M 50/54** (2021.01)

(52) Cooperative Patent Classification (CPC):
**H01M 50/533; H01M 50/54;** H01M 50/103

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Northvolt AB**
**112 47 Stockholm (SE)**

(72) Inventor: **Acosta, Rafael**
**112 47 Stockholm (SE)**

(74) Representative: **AWA Sweden AB**
**Box 45086**
**104 30 Stockholm (SE)**

(54) **CURRENT COLLECTOR FOR A BATTERY CELL**

(57) There is disclosed herein a current collector (300) for a battery cell, comprising a first section (302) comprising a first end (301) configured to connect to an electrode assembly of the cell, and a second section (304) angled relative to the first section (302) comprising a second end (303) configured to connect to a terminal of the cell. A current path is formed from the first end (301) to the second end (303), and a cross-sectional area of the current collector (300) decreases along the current path from the first end (301) to the second end (303) or from the second end (303) to the first end (301).

Fig. 5

## Description

## Technical Field

The present disclosure relates to components for battery cells. In particular, the present disclosure relates to an improved current collector for a battery cell, a method for manufacturing such a current collector from sheet metal, and a battery cell comprising such an improved current collector.

## Background

In addressing climate change, there is an increasing demand for rechargeable batteries, e.g., to enable electrification of transportation and to supplement renewable energy. Such batteries typically comprise a number of battery cells coupled together to provide the desired voltage and current.

Rechargeable or 'secondary' batteries find widespread use as electrical power supplies and energy storage systems. For example, in automobiles, battery packs formed of a plurality of battery modules, wherein each battery module includes a plurality of electrochemical cells, are provided as a means of effective storage and utilization of electric power.

Several different form factors exist for the electrochemical cells applied in secondary batteries depending on their intended application field. In automotive applications, the most common cell types are cylindrical, prismatic and pouch cells.

A battery cell stores electrical energy in an electrode assembly, which may be stacked, and referred to as an 'electrode stack', or rolled, and referred to as an 'electrode roll' or a 'jelly roll'. Stored electrical energy may then be collected and transferred to the terminals of the battery cell via current collectors, which may be adapted for (electrical) connection to the terminal(s) and to the electrode assembly. One current collector may connect between an anode of the electrode assembly and an anode terminal (or negative electrode), while another current collector may connect between a cathode of the electrode assembly and a cathode terminal (or positive electrode).

## Summary

It is realized as a part of the present disclosure that various limitations are placed upon the dimensions of a current collector, such as a placement of a terminal on a battery cell, a location and/or size of a connective portion (e.g., a connective tab) of the electrode assembly, the space available within the confines of the battery cell's casing (e.g., a maximum width or height), an anticipated current flow through the current collector, etc.

However, it is further appreciated as part of the present disclosure that a resistance of the current collector may be advantageously controlled while abiding by these limitations.

In particular, according to an aspect of the present disclosure, there is provided a current collector having a first section comprising a first end configured to connect to an electrode assembly of the cell, and a second section angled relative to the first section comprising a second end configured to connect to a terminal of the cell.

The angling of the first and second sections relative to each other may thus allow for the installation of the current collector around a corner, such as a right-angled corner of substantially 90 degrees. For example, in a prismatic cell having a substantially cuboidal shape and containing a substantially cuboidal electrode assembly, the current collector may be welded, clamped, slotted, or otherwise attached to the electrode assembly at a side thereof (e.g., along a height of the prismatic cell). The current collector may then connect at the other end to the terminal of the prismatic cell which may be arranged at an adjacent side of the electrode assembly (e.g., along a width of the prismatic cell).

A current path is thus defined from the first end to the second end such that electrical energy stored in the electrode assembly can be transferred to the terminal of the cell via the current collector. Similarly, electrical energy for storage in the electrode assembly can be provided thereto via the current collector by connecting a source of electrical energy to the terminal.

It is often desirable to have a flexible choice for the placement of the terminal on a casing of the battery cell. It will be appreciated that, while a terminal may protrude from the casing or appear to be attached to an outside of the casing, the terminal may in fact extend through the casing, e.g., as part of a terminal rivet arrangement, the details of which are not discussed herein.

However, when providing the terminal at a relatively distant location to the point of connection with the electrode assembly, i.e., such that multiple angled sections of the current collector may create a current path therebetween, it is appreciated as part of the present disclosure that a weight of the current collector may be undesirably increased.

Moreover, making the entirety of the current collector thinner may undesirably increase the resistance of the current path That is, the resistance $R$ of the current collector, having a length $L$, may be inversely proportional to its cross-sectional area $A$, i.e., following a relation of:

$$R \propto \frac{L}{A}$$

Therefore, it is realized as a part of the present disclosure that an advantageous configuration of the current collector, to address these desires and limitations, comprises a cross-sectional area of the current collector that decreases along the current path from the first end to the second end or from the second end to the first end.

For example, a thickness of the current collector may decrease along the current path, or a width of the current collector may decrease along the current path. As used herein, a thickness of the current collector may be defined as being perpendicular to a length and an axis about which the angled sections are joined, while a width of the current collector may be defined as being perpendicular to a length, and along the axis about which the angled sections are joined.

According to this approach, a length of the current collector may be arbitrarily adjusted according to a desired placement of the terminal relative to a point of connection of the current collector to the electrode assembly. The current collector may then be thinned and/or narrowed towards the end connecting to the terminal, to any extent desired based on weight, space, or other limitations. To accommodate for the effect that this change to the cross-sectional area may have on the overall resistance of the current collector, an end connecting to the electrode assembly may be correspondingly widened and/or thickened. It will be appreciated that, while a desired arbitrary placement of the terminal is discussed, this placement location may instead be fixed and an arbitrary connection location to the electrode assembly may be desired.

Furthermore, by ensuring that the cross-sectional area of the current collector decreases along the current path, i.e., along the entire length along which the charging or discharging current flow will pass, no areas of localized heating may be created. That is, if a thinner part of the current collector is placed between two thicker sections of the current collector, along the current path from the electrode assembly and the terminal, a 'hotspot' may be created, which may excessively heat up during charging or discharging of the battery cell. Thus, according to the presently disclosed approach, a risk of damage to the battery cell caused by failure of the current collector is advantageously reduced.

The reduction of the cross-sectional area of the current collector along the current path may be evenly or otherwise distributed, such that the current collector (or at least the portion thereof forming the current path) may narrow in a linear or exponential fashion along the entire length between the connection to the electrode assembly and the connection to the terminal (i.e., between the first and second ends).

Alternatively, the reduction of the cross-sectional area of the current collector may be substantially confined to one portion. That is, the current path of the current collector may comprise a first portion having a first (e.g., greater) cross-sectional area, a second portion having a second (e.g., lesser) cross-sectional area, and a transitional portion connecting the first portion to the second portion.

The transition portion may comprise a step, a chamfer, and/or a curve, depending on the implementation, and may be arranged in the first section of the current collector or the second section. If the transition portion comprises a step, the placement of the step on the current collector may be configured to coincide with a corner of the electrode assembly such that the current collector may advantageously conform to a profile of the electrode assembly and thus avoid a collision therewith (e.g., during a crush event or otherwise).

Alternatively, if the transition portion comprises a chamfer (which may be considered as being the same as a bevel) or an appropriately shaped curve, then the transition portion may be placed relative to a corner of the electrode assembly such that, during an impact of the current collector with said corner of the electrode assembly, the chamfer/curve may cause the current collector to be pushed up and around the corner, thus limiting a damage caused to the electrode assembly by the current collector.

The first portion of the current path may be configured to have a same electrical resistance as the second portion of the current path. For example, if a length of the second portion is increased by a factor of X, relative to some reference length of the first portion, then a cross-sectional area of the second portion may be correspondingly decreased by a factor of X, thereby keeping the resistance the same relative to the first portion. Hence, the electrical properties of the current collector may be improved, such that the transition portion may not be placed under particular electrical strain, e.g., as a location of connection between two sections having potentially different resistances.

The first section of the current collector may be connected to the electrode assembly via a separate component or via an integral further section of the current collector. For example, the current collector may further comprise a third section extending from the first section wherein the third section is configured to attach (e.g., weld, clamp, etc.) to the electrode assembly. The first, second, and third sections may each be integrally formed as a single piece.

The third section may comprise one or more legs adapted for welding or otherwise attaching to a connective tab of the electrode assembly. For example, the electrode assembly may comprise, extending from a side thereof, an extension of the cathode sheet(s) that may form a 'tab', which may comprise notches or feathering. The tab may be welded to the one or more legs of the third section of the current collector to thereby form a structural and electrical connection along the entirety of the welded attachment. Thus, the current path referred to herein may be defined as starting at a terminus of this attachment, and at a first end of the first section from which the third section extends.

The current collector according to the presently disclosed approach may be formed of folded sheet metal for convenience and speed of manufacturing. The sheet metal may be any suitable metal for forming a current collector such as zinc, steel, copper, or the like.

The presently disclosed approach may be more advantageously applied to a cathode of the battery cell, as conventional cathode materials may comprise metals whose resistance is typically higher than conventional anode materials. However, the presently disclosed approach may improve both anode and cathode current collectors of a battery cell.

According to a further aspect of the present disclosure, there is provided a method of manufacturing a current collector from sheet metal, which may comprise machining a piece of sheet metal to provide the decreasing cross-sectional area along the current path, and then folding the sheet metal to thereby form the current collector.

The machining of the sheet metal may comprise laser cutting, etching, drilling, sanding, and/or any other suitable machining process. The folding may then be performed manually or automatically using one or more folding machines.

According to yet a further aspect of the present disclosure, there is provided a battery cell, comprising an electrode assembly, a terminal, and a current collector as substantially described above, connecting the electrode assembly and the terminal.

As mentioned above, the electrode assembly may comprise a connective tab for attaching to the third section of the current collector. According to an example, the connective tab may be arranged at a first side of the electrode assembly, while the terminal may be arranged at a second side of the electrode assembly, the second side being adjacent to the first side.

For example, the electrode assembly may have a substantially rectangular profile (e.g., as a result of having a substantially cuboidal shape), and the current collector may be arranged around a corner of the substantially rectangular profile of the electrode assembly. It will be appreciated that, according to such an example, the current collector may preferably have the first section and the second section angled at substantially 90 degrees to each other such that the vertex formed at their meeting may conform to the outer profile of the electrode assembly. Therefore a space efficient configuration of the current collector may be achieved.

In some further examples, as mentioned above, the spatial efficiency of the current collector may be further enhanced by aligning the transition portion of the current collector with the corner of the substantially rectangular profile of the electrode assembly. Moreover, such an arrangement may advantageously allow for the current collector to avoid colliding with (e.g., and risk causing damage to) the electrode assembly.

In an example, the current collector the connective tab and the third section of the current collector may extend along a first side of the electrode assembly from substantially adjacent to the corner of the substantially rectangular profile of the electrode assembly. Therefore, the first section of the current collector may be substantially shorter than the second section of the current collector, but the overall length of the current path may be minimized, allowing for a limitation whereby the terminal is at a different side of the substantially rectangular profile of the electrode assembly than connection of the first end to the electrode assembly. Thus, an overall resistance of the current collector may be advantageously reduced.

In any event, numerous advantages, some of which are described above, may be realized through a specially adapted cross-sectional area of a current collector in a cell. These advantages, as well as others, may be further appreciated through a description of specific illustrated embodiments.

**Brief Description of the Drawings**

One or more embodiments will be described, by way of example only, and with reference to the following figures, in which:

Figure 1 schematically shows a prismatic cell as an example of a battery cell;
Figure 2 schematically shows a cross-sectional view of a portion of the prismatic cell shown in figure 1, containing a comparative example of a current collector, against which embodiments of the present disclosure may be compared;
Figures 3A and 3B schematically show the same cross-sectional view as figure 2, wherein the prismatic cell contains current collectors according to embodiments of the present disclosure;
Figure 4 shows a cross-sectional view of the prismatic cell shown in figure 1, containing current collectors according to an embodiment of the present disclosure;
Figure 5 schematically shows in isolation a current collector according to an embodiment of the present disclosure;
Figures 6A to 6C show various examples for a transition portion for providing in a current collector according to an embodiment the present disclosure;
Figures 7A to 7F show a variety of views of an example current collector according to an embodiment of the present disclosure; and
Figure 8 illustrates a method of manufacturing a current collector according to an embodiment of the present disclosure from sheet metal.

**Detailed Description**

The present disclosure is described in the following by way of a number of illustrative examples. It will be appreciated that these examples are provided for illustration and explanation only and are not intended to be limiting on the scope of the disclosure.

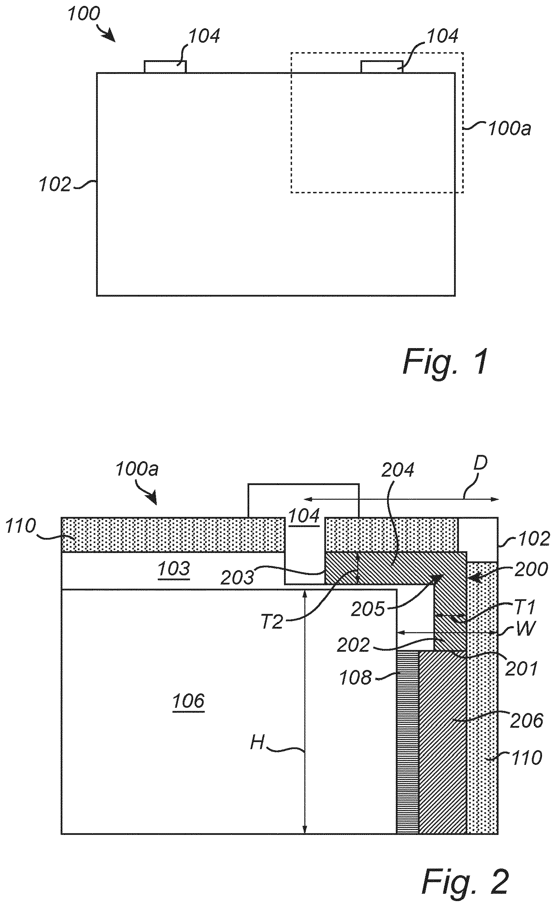

Figure 1 schematically shows a battery cell 100, also referred to hereinafter as 'cell 100', having a prismatic form factor. The cell 100 may have a substantially cuboidal shape, thereby having a rectangular profile, as shown in figure 1.

The cell 100 may comprise a casing 102, which may determine the general form factor of the cell 100 and may be configured (e.g., in its dimensions) for installation into a larger battery module, battery pack, or other battery assembly. The casing 102 may preferably be rigid and resistant to external shocks or impacts, for example being made of metal such as aluminum, or made of a high density plastic.

The casing 102 may be formed from a plurality of sides joined together or may be formed of substantially one or two pieces, e.g., by extrusion, additive manufacturing (AM), or some other manufacturing technique. According to an example, the casing 102 may comprise a height (extending vertically as shown in figure 1), a width (extending horizontally as shown in figure 1), and a thickness (not visible).

The prismatic form factor for the cell 100, as defined substantially by the casing 102, may comprise two larger faces spaced apart by a relatively small distance in the thickness direction, and a plurality of comparatively smaller faces bridging between the two larger faces. The casing 102 may be formed by providing an open cuboidal shape, and sealing the open face of the open cuboidal shape with a lid. For example, the lid may form the upper face of the casing 102 (shown only as the top line in figure 1).

Internal components of the cell 100 may be introduced into the casing 102 and then a lid may be provided thereover and sealed in placed to thereby contain the internal components. The lid may be attached in a substantially watertight fashion so as to contain liquid electrolyte in the cell 100, for example. The lid may be provided with a vent, an injection port for injecting electrolyte, and/or other features, the details of which are outside the scope of the present disclosure.

In the illustrated example, provided on the casing 102 of the cell, and extending therethrough to an internal of the cell 100, are a pair of terminals 104. One of the terminals 104 may be an anode and the other may be a cathode. The terminals 104 may be riveted through the casing 102, e.g., through the lid thereof, and provided with a gasket therearound to improve the watertight seal that the casing 102 may preferably provide. The terminals 104 may be made of any suitable conductive material, although the particular manufacture and installation of the terminals 104 is outside the scope of the present disclosure.

Both of the terminals 104 are shown installed at an upper face of the casing 102 of the cell 100. However, it will be appreciated that either of the terminals 104 may instead be provided at any location around the casing 102 of the cell 100. Indeed, it may be advantageous to have free choice in respect of the location of the placement of the terminals 104.

For example, when designing a battery module, pack, or other assembly, the terminals 104 of the constituent cells 100 may preferably be as close as possible to a connective assembly for routing power throughout said battery assembly. In another example, it may be preferred for the terminals 104 to be as close together as possible, or as far away from each other as possible, depending on the particular implementation.

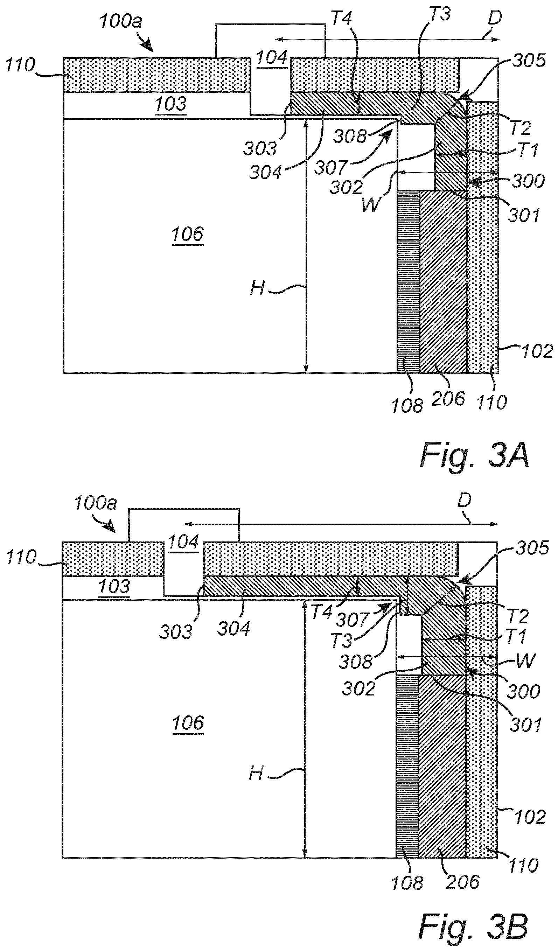

In the discussion of figures 2, 3A, and 3B, an upper-right portion 100a of the cell 100, as indicated by the dotted box, will be focused on for the purpose of clear illustration.

Figure 2 schematically shows a cross-sectional view of the portion 100a of the cell 100 indicated in figure 1. As can be seen in this view, the terminal 104 may extend through the casing 102 and into an internal space 103 of the cell 100. For the purpose of discussion, it will be assumed that the illustrated portion 100a of the cell 100 comprises the cathode side of the cell 100.

The cell 100 may further comprise an electrode assembly 106, which may be an electrode roll or an electrode stack, for example, comprising a plurality of sheets. The plurality of sheets may comprise an anode, a cathode, and a separator for separating the anode from the cathode, thereby providing the electrode assembly 106 with its ability to store electrical energy. The electrode assembly 106 may comprise, at a side thereof, a connective tab 108 for electrically connecting to other components of the cell 100.

The connective tab 108 may be an extension from the roll or stack of one or more cathode sheets, which may then be provided with notches, feathering, or some other processing to further facilitate the connection of the connective tab 108 to other electrical components.

The cell 100 may be further provided with one or more spacers 110, some of which being electrical insulators, for appropriately spacing, retaining, etc. internal components of the cell 100 in their respective desired positions, and/or electrically insulating internal components of the cell 100 from each other or from the casing 102. For example, it may be preferred, e.g., to reduce damage during crushes or otherwise, to maintain the electrode assembly 106 a distance W from a side wall of the casing 102.

The electrode assembly 106 may be connected to the terminal 104 via a current collector 200. The current collector 200 may form a current path between the electrode assembly and the terminal 104 and may thus be formed from any suitable material such as zinc, steel, copper, etc., although the choice of material may further depend on whether the current collector 200 is connecting the anode side or the cathode side of the cell 100.

The current collector 200 may comprise a first section 202 configured for connection to the electrode assembly via a first end 201 that is connected to the electrode assembly 106.

The current collector 200 may further comprise a second section 204 angled relative to the first section 202 by 90 degrees, although it will be appreciated that this angle is just an example. Nonetheless, the angling may be preferably configured for conforming to a profile of the electrode assembly 106. The second section 204 may be configured for connection to the terminal 104 via a second end 203.

The first end 201 of the current collector 200 may be attached or connected to the connective tab 108 of the electrode assembly 106 via a third section 206 of the current collector 200, extending from the first end 201 of the first section 202. The third section 206 may be a separate component or may be integrally formed as part of the current collector 200.

The illustrated current collector 200 may be referred to as a 'side current collector 200' because the connection of the current collector 200 to the electrode assembly 106 happens along a side thereof (i.e., parallel to the height H of the electrode assembly 106), such that the first section 202 extends along the side, while the connection to the terminal 104 happens along the top of the electrode assembly 106 (i.e., parallel to a width of the electrode assembly 106).

The terminal 104 may be arranged at a side of the cell 100 that is not the closest to the side of the electrode assembly 106 along which the current collector 200 is connector. As such, the use of a side current collector 200 having sections 202 and 204 at an angle to each other may allow for the installation of the current collector 200 around the electrode assembly 106 and formation of a current path between said electrode assembly 106 and the terminal 104.

Figure 2 shows a comparative example for a current collector 200 whereby the thickness T1 throughout the first section 202 may be the same as the thickness T2 throughout the second section 204. It can be assumed for this illustrated example that the width (not visible) is constant, such that the thickness T1, T2 of the current collector 200 at a location there along is directly determinative of the cross-sectional area of the current-collector 200 at said location.

According to this comparative example, if the terminal 104 were to be moved further from the side of the cell 100 - that is, were the illustrated distance D to be increased, it may be considered to extend the second section 204 of the current collector 200 such that the thickness T2 is maintained along this extension, T2 being the same as the thickness T1 of the first section 202.

Figure 3A shows a current collector 300 according to an embodiment of the present disclosure, installed in place of the current collector 200 discussed in respect of figure 2, having the terminal 104 moved further along the top of the cell 100 such that a distance D from the side is increased.

According to the illustrated embodiment, the current collector 300 may comprise a first section 302 having a first end 301 connected to the third section 206 (substantially the same as the third section 206 discussed above), and a second section 304 angled relative to the first section 302 and having a second end 303 for connecting to the terminal 104. Thus, a current path may be formed between the electrode assembly 106 and the terminal 104.

Again, for this illustrated example, it can be assumed that the width (not shown) is constant such that the thickness of the current collector 300 and variations thereof are determinative of a change in cross-sectional area of the current collector 300.

According to the illustrated embodiment of the present disclosure shown in figure 3A, the first section 302 may have a thickness T1 along its entirety. The vertex 305 where the first section 302 and the second section 304 meet (or are joined) may advantageously be rounded or otherwise shaped such that the thickness T2 at this vertex may be substantially the same as the thickness T1, or thinner than the thickness T1.

The second section 304 of the current collector 300 may have a varying thickness such that, from a part of the second section 304 adjacent the vertex 305, the thickness T3 may be substantially the same as the thicknesses T1 and T2, or thinner. The second section 304 may then comprise a transition portion 307 formed of a step 308 such that the thickness of the second portion 304 transitions towards the terminal 104 from a thickness T3 to a thickness T4 that is less than T3.

The second section 304 may then extend from the transition portion 307 to the terminal 104 with a constant or decreasing thickness T4. Therefore, in this illustrated example, the cross-sectional area of the current collector 300 may decrease from the first end 301 to the second end 303. The thicknesses T1 to T4 may be adapted in any manner, while maintaining that $T1 \geq T2 \geq T3 \geq T4$.

Although only four different parts of the current collector 300 are discussed, it will be appreciated that substantially any plurality of parts of decreasing thickness may be introduced while achieving the same advantageous effects. It will also be appreciated that, whilst thickness is discussed in particular in this example, the width may instead or additionally be varied so as to achieve the decrease in cross-sectional area.

It will be further appreciated that, is some alternative embodiments of the present disclosure, the decrease in cross-sectional area may instead be from the second end 303 to the first end 301 (e.g., such that $T4 \geq T3 \geq T2 \geq T1$).

Consequently, a current path may be formed from the electrode assembly 106 to the terminal 104 without an excessive increase in weight of the cell 100, or a substantial decrease in electrical resistance of the current collector 300. That is, the current collector 300 may comprise at least a part of a section 302, 304 having a reduced cross-sectional area such that the overall length of the current collector 300 may be advantageously increased/varied without an accompanying increase/change in its weight (e.g., as may be the case for a current collector 200 of constant cross-sectional area as illustrated in figure 2).

As a further consequence of the above-described configuration of the current collector 300, the resistance of the current collector 300 may be advantageously maintained at an optimal or preferred value for proper operation of the cell 100 (e.g., as opposed to the reduction of resistance that may be caused by thinning or narrowing the entirety of the current collector 200 shown in figure 2).

Figure 3B shows another example embodiment of the present disclosure, wherein the distance D of the terminal from a side of the cell 100 is further than the distance D shown in figure 3A.

According to the illustrated example embodiment, the thickness T4 in the second section 304 of the current collector 300 may be made even thinner than the thickness T4 of the second section 304 shown in figure 3A so as to allow for an increase in the length of the second section 304 without an accompanying increase in weight.

In order to prevent this decrease in thickness T4 of the second section 304 negatively impacting the resistive properties of the current collector 300 as illustrated in figure 3B, a thickness T1 (and T2 and T3) may be made comparatively thicker when compared to their respective thicknesses as in the embodiment shown in figure 3A, whilst maintaining the relation of $T1 \geq T2 \geq T3 \geq T4$.

Thus, when comparing figures 3A and 3B, it will be appreciated that the terminal 104 can be freely placed substantially anywhere around the casing 102 of the cell 100 and a current collector 300 according to the present disclosure may be provided to form a current path between said terminal 104 and the electrode assembly 106 without excessively increasing the weight or altering the resistive properties of the cell 100.

Such flexibility of choice when positioning the terminal 104 may thus allow for a compatibility of the cell 100 with a wider battery assembly which may place constraints on where one or more of the terminals 104 of the cell 100 can be placed in order to be incorporated into said battery assembly.

According to the embodiments of the present disclosure shown in figures 3A and 3B, the current collector 300 may further comprise a rounded or shaped vertex 305 such that a thickness can be controlled at said vertex 305, i.e., without an increase in thickness that may be provided by a linear vertex such as the vertex 205 shown in figure 2.

Furthermore, as can be seen in figures 3A and 3B, by providing the transition portion 307 (i.e., the step 308) as part of the second section 304 that extends along the width of the electrode assembly 106, the electrode assembly 106 may advantageously be avoided by the current collector 300. In some examples, such an arrangement may further allow for a greater height H of the electrode assembly 106, e.g., relative to a height of the cell 100, thus facilitating an increased energy density if the cell 100.

By configuring the current collector 300 with a current path which has a decreasing cross-sectional area, the creation of potential points of localized heating may be advantageously avoided. Thus, the thermal properties of the current collector 300 and the cell 100 as a whole may be improved as a result of the presently disclosed configuration for the current collector 300, which may in turn prolong the operational life thereof.

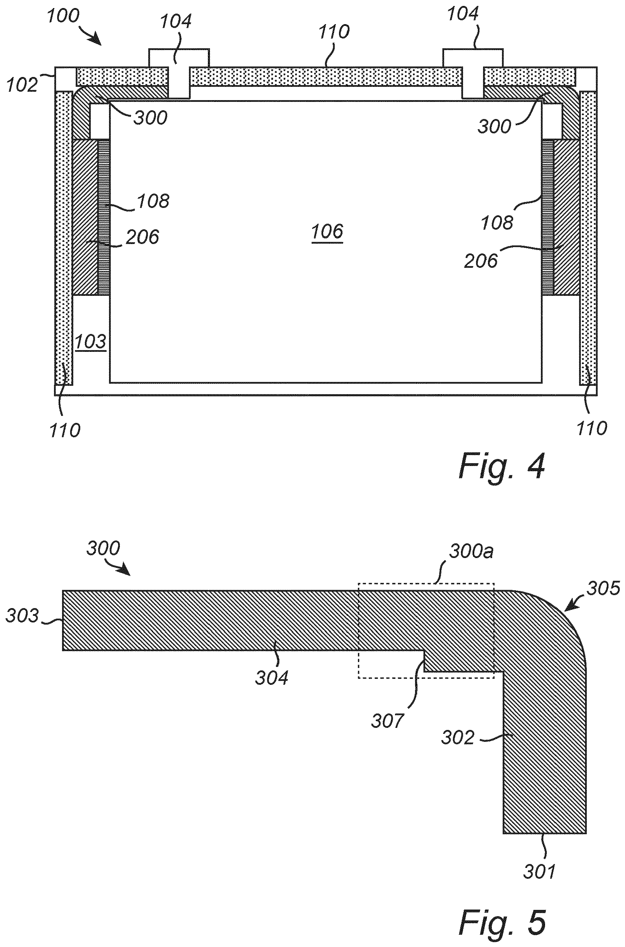

Figure 4 shows a cross-sectional view of an example cell 100 incorporating two current collectors 300, which may be the same or similar to the current collector 300 as described in relation to figures 3A and 3B.

The cell 100 may have a substantially prismatic shape as defined by its casing 102. The electrode assembly 106 may have a complementarily prismatic shape such that it has a substantially rectangular profile, as shown in figure 4. The current collector 300 may then be arranged around respective corners of this substantially rectangular profile.

One of the current collectors 300 may comprise a current path between an anode of the electrode assembly 106 and an anode terminal 104, while the other current collector 300 may comprise a current path between a cathode of the electrode assembly 106 and a cathode terminal 104.

In some examples, only one current collector 300 having a decreasing cross-sectional area may be installed into the cell 100. For example, the anode current collector may be made of a metal with superior resistive properties compared to the cathode current collector such that advantages of the present disclosed configuration of the current collector may be more readily realized on the cathode side.

It will be appreciated that, while a prismatic cell 100 is illustrated and discussed herein, the presently disclosed current collector 300 may also be installed into cells having different shapes, with the same advantages being realized. For example, some cells may comprise one terminal part like the terminal 104, and use the remainder of the casing 102 as the other terminal.

Figure 5 shows an isolated view of a current collector 300 (without an integral third section 206), according to an embodiment of the present disclosure.

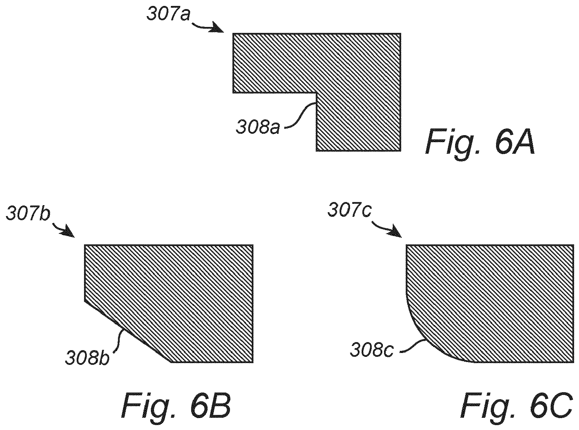

According to illustrated embodiment, the current collector 300 may comprise a transition portion 307, which may comprise a step (as illustrated) or another shape or form, such as the various shapes/forms discussed in relation to figures 6A to 6C.

The transition portion 307 may be arranged on the second section 304 or the first section 302, and the first section 302 and the second section 304 may be angled relative to each other so as to meet at a vertex 305. The transition portion 307 may be on the vertex 305, adjacent thereto, or distanced therefrom, depending on the implementation.

As mentioned, figures 6A to 6C show various example shapes or forms for the transition portion, whereby each of figures 6A to 6C show an isolated portion 300a from figure 5 as indicated therein by the dashed box. Each of the figures 6A to 6C show respective example transition portions 307a to 307c having shapes 308a to 308c.

The transition portion 307a may have a shape 308a comprising a step, whereby a step may be defined by an immediate change in thickness and/or width of the current collector 300, e.g., forming a substantially perpendicular pair of surfaces.

The transition portion 307b may have a shape 308b comprising a chamfer or bevel, defined by a linear increase in the thickness and/or width of the current collector 300, e.g., forming a sloping surface between two portions of the current collector 300 with differing thicknesses/widths.

The transition portion 307c may have a shape 308c comprising a curved surface, defined by an exponential, parabolic, or other function of increase of thickness and/or width of the current collector 300.

Linear shapes such as the step 308a or the chamfer 308b may be advantageously easier to manufacture than a curved shape 308c. If the current collector 300 is made from a piece of folded sheet metal, for example, the manufacture of the transition portion 307 may comprise a machining of the sheet metal before a folding thereof.

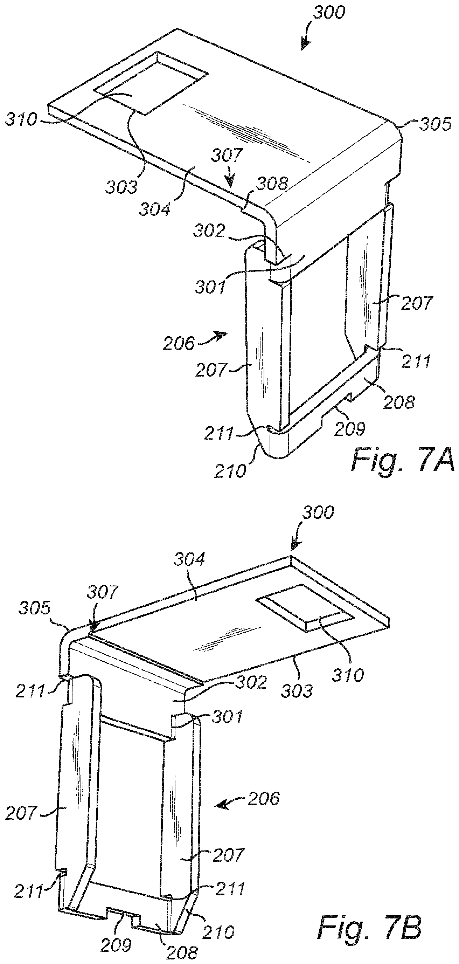

Figures 7A to 7F show various views of an example embodiment of the current collector 300, which may be formed from a piece of folded sheet metal.

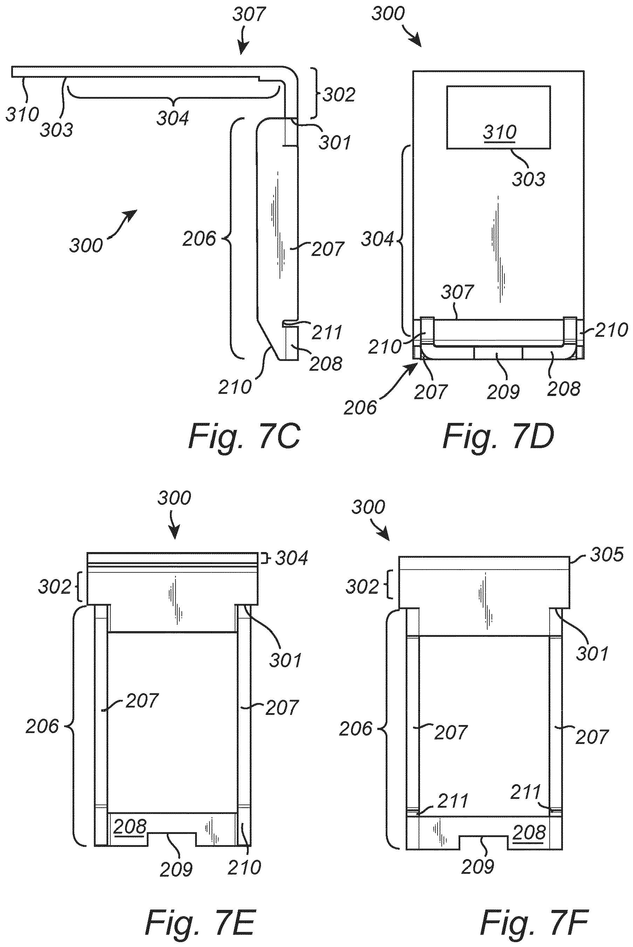

Figures 7A and 7B show perspective views from behind/rear and in front of the current collector 300 where, for the purpose of this discussion, a front of the current collector 300 may be defined as that intended for facing towards the connective tab of the electrode assembly. Figure 7C shows a side-on view of the current collector 300 and figure 7D shows a bottom view of the current collector 300, whereby a bottom of the current collector 300 can be defined at least for the purposes of the present discussion as comprising the surface intended for facing towards the terminal-adjacent side of the electrode assembly. Figure 7E shows a front-on view and figure 7F shows a rear-on view of the current collector 300.

Using consistent numbering as with previous figures 3A and 3B to figures 6A to 6C, the current collector 300 may comprise a first section 302 and a second section 304 arranged at an angle relative to the first section 302 - in this example, substantially 90 degrees.

The first section 302 and the second section 304 may meet at a vertex 305, and a current path may thereby be formed between a first end 301 in the first section 302, and a second end 303 in the second section 304. Along the current path, the width of the current collector 300 may be substantially constant.

The first end 301 may be connected to a third section 206 configured for attachment to an electrode assembly. The third section 206 may be integrally formed as part of the current collector 300. For example, the third section 206 may be an extension of the first section 302 and formed during a same machining and folding of a piece of sheet metal that forms the first section 302 and the second section 304.

The second end 303 may terminate at a terminal collar 310 configured for resiliently attaching/connecting to the terminal of a cell. The terminal collar 310 may comprise a through-hole in the current collector 300 such that a terminal part can extend at least partially therethrough.

The transition portion 307 may be formed on the second section 304 of the current collector 300 and may take the form of a step 308 such that excessive mechanical contact with an electrode assembly in a cell may be advantageously avoided when the current collector 300 is arranged in the cell and around the electrode assembly.

The third section 206 may comprise a pair of legs 207 configured for welding (or otherwise attaching) to a connective tab of the electrode assembly. The legs 207 may extend in a plane parallel to the connective tab (when in position) so as to provide a suitable attachment surface. It will be appreciated that only one leg 207, or more legs 207, may be provided, in some examples.

The legs 207 may terminate in a taper or chamfer 210 at an end of the legs 207. Furthermore, a brace 208 may be provided across the legs 207 to provide structural support thereto. The brace may comprise a mating element 209 for mating with a corresponding mating element on, e.g., an insulating or spacing element arranged within a casing of the cell.

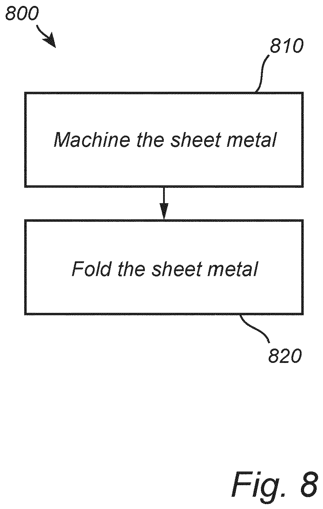

Figure 8 schematically illustrates a method 800 for manufacturing a current collector from a piece of sheet metal, such as that shown in figures 7A to 7F. As shown therein, the method 800 may first comprise machining 810 the sheet metal. Machining 810 the sheet metal may comprise any number of processes such as cutting (e.g., using water jets, lasers, etc.), drilling, shaving, and the like.

The sheet metal may be provided with a constant width and/or thickness, and machining 810 of the sheet metal may thereby form the change in width and/or thickness (e.g., including the transition portion 307). For the current collector 300 shown in figures 7A to 7F, the machining 810 may further comprise forming and shaping the legs 207 of the third section 206, the mating element 209, the chamfer 210, the terminal collar 310, and/or other elements of the current collector 300.

The machining 810 may further comprise a formation of folding aids 211, which may provide localized weakenings configured for allowing the folding of the sheet metal along desired axes. The folding aids 211 may double as further mating elements when the sheet metal has been folded, in some examples.

The method 800 may then comprise a step of folding 820 the sheet metal, to thereby form a current collector, such as the current collector 300 shown in figures 7A to 7F. The folding 820 may be performed manually or by automatic folding machines, depending on the implementation. Moreover, the folding 820 may be performed in one combined step or as a series of folding steps, depending on the implementation. Once folded, the current collector may thereby comprise two sections angled relative to each other for arranging around a corner of an electrode assembly of a battery cell, as described above.

By manufacturing the current collector according to such a method 800, a current collector, having many advantageous features as described above, may be produced rapidly at a large scale and for a low cost. The method may be readily automated as part of a wider cell manufacture and assembly process, for example.

It will be appreciated that the configuration and implementation of an improved current collector, as described above in relation to figures 7A to 7F, is but one example of many which may fall within the scope of the present disclosure, and this illustrated example has been provided merely to assist in understanding particular aspects of the present disclosure.

Any reference to prior documents or comparative examples in this specification is not to be considered an admission that such prior art is widely known or forms part of the common general knowledge in the field.

Furthermore, while the present disclosure is susceptible to various modifications and alternative forms, specific embodiments are shown and described by way of example in relation to the drawings, with a view to clearly explaining the various advantageous aspects of the present disclosure. It should be understood, however, that the detailed description herein and the drawings attached hereto are not intended to limit the disclosure to the particular form disclosed. Rather, the intention is to cover all modifications, equivalents, and alternatives falling within the scope of the following claims.

**Claims**

1. A current collector for a battery cell, comprising:

   a first section comprising a first end configured to connect to an electrode assembly of the cell;
   a second section angled relative to the first section comprising a second end configured to connect to a terminal of the cell; and
   a current path from the first end to the second end;
   wherein:
   a cross-sectional area of the current collector decreases along the current path from the first end to the second end or from the second end to the first end.

2. The current collector according to claim 1, wherein:
   a thickness of the current collector decreases along the current path.

3. The current collector according to claim 1 or claim 2, wherein:
   a width of the current collector decreases along the current path.

4. The current collector according to any preceding claim, wherein:
   the second section is angled relative to the first section at substantially 90 degrees.

5. The current collector according to any preceding claim, wherein the current path comprises:

   a first portion having a first cross-sectional area;
   a second portion having a second cross-sectional area; and
   a transitional portion connecting the first portion to the second portion.

6. The current collector according to claim 5, wherein:
   the transition portion comprises:

   a step,
   a chamfer, and/or
   a curve.

7. The current collector according to claim 5 or claim 6, wherein:
   the first portion of the current path is configured to have a same electrical resistance as the second portion of the current path.

8. The current collector according to any preceding claim, further comprising a third section extending from the first section wherein:
   the third section is configured to attach to the electrode assembly.

9. The current collector according to any preceding claim, wherein:
   the current collector is formed of folded sheet metal.

10. A method of manufacturing the current collector according to claim 9, comprising:

    machining a piece of sheet metal to provide the decreasing cross-sectional area along the current path; and
    folding the sheet metal to thereby form the current collector.

11. A battery cell, comprising:

    an electrode assembly;
    a terminal;
    a current collector according to any preceding claim, connecting the electrode assembly and the terminal.

12. The battery cell according to claim 11, wherein:

    the electrode assembly comprises a connective tab for attaching to an attachment portion of the current collector;
the connective tab is arranged at the first side of the battery cell; and
the terminal is arranged at the second side of the battery cell.

13. The battery cell according to claim 12, wherein:

the electrode assembly has a substantially rectangular profile; and
the current collector is arranged around a corner of the substantially rectangular profile of the electrode assembly.

14. The battery cell according to 13, wherein:
the transition portion of the current collector is aligned with the corner of the substantially rectangular profile of the electrode assembly.

15. The battery cell according to claim 13 or claim 14, wherein:

the current collector is a current collector according to claim 8;
the connective tab and the attachment portion extend along the first side of the battery cell from substantially adjacent to the corner of the substantially profile of the electrode assembly.

*Fig. 1*

*Fig. 2*

Fig. 3A

Fig. 3B

Fig. 4

Fig. 5

307a

308a

*Fig. 6A*

307b

308b

*Fig. 6B*

307c

308c

*Fig. 6C*

Fig. 7A

Fig. 7B

Fig. 7C

Fig. 7D

Fig. 7E

Fig. 7F

*800*

*810*

Machine the sheet metal

Fold the sheet metal

*820*

*Fig. 8*

Europäisches
Patentamt

European
Patent Office

Office européen
des brevets

# EUROPEAN SEARCH REPORT

**Application Number**

EP 22 18 8914

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 200 262 A1 (HITACHI AUTOMOTIVE SYSTEMS LTD [JP]) 2 August 2017 (2017-08-02) | 1-7,9-14 | INV. H01M50/533 H01M50/54 |
| Y | * paragraphs [0032] - [0040] * * figures 2,4-8,10-17 * | 8,15 | |
| Y | EP 2 515 362 A2 (SB LIMOTIVE CO LTD [KR]) 24 October 2012 (2012-10-24) * paragraphs [0049] - [0052] * * figures 1,2 * | 8,15 | |
| X | EP 2 541 649 A1 (SB LIMOTIVE CO LTD [KR]) 2 January 2013 (2013-01-02) * paragraphs [0054] - [0056], [0085] - [0088] * * figures 2-6 * | 1,3-7, 9-14 | |

**TECHNICAL FIELDS SEARCHED (IPC)**

H01M

The present search report has been drawn up for all claims

| Place of search | Date of completion of the search | Examiner |
|---|---|---|
| The Hague | 18 January 2023 | Knoflacher, Andreas |

## ANNEX TO THE EUROPEAN SEARCH REPORT
## ON EUROPEAN PATENT APPLICATION NO.

EP 22 18 8914

18-01-2023

| Patent document cited in search report | | | Publication date | Patent family member(s) | | | Publication date |
|---|---|---|---|---|---|---|---|
| EP | 3200262 | A1 | 02-08-2017 | CN | 106688123 | A | 17-05-2017 |
| | | | | EP | 3200262 | A1 | 02-08-2017 |
| | | | | EP | 3537507 | A1 | 11-09-2019 |
| | | | | JP | 6410833 | B2 | 24-10-2018 |
| | | | | JP | WO2016047199 | A1 | 31-08-2017 |
| | | | | US | 2017294684 | A1 | 12-10-2017 |
| | | | | WO | 2016047199 | A1 | 31-03-2016 |
| EP | 2515362 | A2 | 24-10-2012 | CN | 102751527 | A | 24-10-2012 |
| | | | | EP | 2515362 | A2 | 24-10-2012 |
| | | | | JP | 5580262 | B2 | 27-08-2014 |
| | | | | JP | 2012227113 | A | 15-11-2012 |
| | | | | KR | 20120123168 | A | 08-11-2012 |
| | | | | US | 2012270099 | A1 | 25-10-2012 |
| EP | 2541649 | A1 | 02-01-2013 | EP | 2541649 | A1 | 02-01-2013 |
| | | | | KR | 20130003148 | A | 09-01-2013 |
| | | | | US | 2013004831 | A1 | 03-01-2013 |

EPO FORM P0459